# EUROPEAN PATENT APPLICATION

(11) **EP 4 841 848 A1**
(43) Date of publication of application: **18.11.2026**
(21) Application number: 25305673.3
(22) Date of filing: 12.05.2025
(51) Int. Cl.: H02J 3/00, G06N 3/02, G06N 3/045, G06N 3/08, H02J 3/32, H02J 3/38, H02J 7/34

(54) **LEARNING A SURROGATE MODEL OF AN HPP STOCHASTIC ENERGY MANAGEMENT SYSTEM AND USE FOR HPP SIZING**

(71) Applicant: TotalEnergies OneTech, 92400 Courbevoie (FR)
(72) Inventor: Assaad, Charbel, 4000 Roskilde (DK); Zhu, Rujie, 4000 Roskilde (DK); Das, Kaushik, 4000 Roskilde (DK); Murcia Leon, Juan Pablo, 4000 Roskilde (DK); Ghazouani, Sami, 92078 Paris la Défense Cedex (FR)
(74) Representative: Bandpay & Greuter

(57) **Abstract**

The disclosure concerns a method for learning an SEMS surrogate. The method comprises obtaining a dataset of training examples and training the surrogate. Each example includes an input and an output. The input includes ratios representing a HPP configuration. The input further includes, for each input variable of a set of input variables, a respective plurality of time series of values of the input variable over a predetermined period. The set of input variables comprises an input variable representing a demand for energy from the grid and one or more input variables each representing power of a respective renewable energy resource. For at least two input variables, the respective pluralities of time series of the at least two input variables stem from different forecasters. The output includes data representing a result of applying a high-fidelity SEMS to the input.

## Description

### TECHNICAL FIELD

The disclosure relates to the field of computer programs and systems, and more specifically to a method of machine-learning, for learning a surrogate model of an HPP (Hybrid Power Plant) Stochastic Energy Management System (SEMS), to a surrogate model of a SEMS learnable according to the method of machine-learning, to a method of use of this surrogate model, to a computer program for performing the method and/or the method of use, to a computer-readable data storage medium having recorded thereon the computer program and/or the surrogate model, and to a computer system comprising a processor coupled to a memory, the memory having recorded thereon the computer program and/or the surrogate model.

### BACKGROUND

Sizing of Hybrid Power Plants (HPPs), which include renewable power plants (e.g. wind power plants and/or solar power plants) and battery energy systems, is essential to capture trade-offs among various technology mixes. To accurately represent these trade-offs, an Energy Management System (EMS) is introduced to model the operation of a battery when participating in any power market, resulting in realistic predictions. Some of these models are Stochastic Energy Management Systems (SEMS), and account for uncertainties, for example in weather and electricity forecasts. In contrast, non-stochastic EMS may be referred to as "deterministic EMS" (DEMS). However, traditional DEMS or SEMS models are computationally expensive to solve, a challenge that intensifies when integrating these models into sizing processes.

There is still thus a need for improved solutions usable for HPP sizing.

### SUMMARY

It is therefore provided a computer-implemented method of machine-learning, for learning a surrogate model of an HPP Stochastic Energy Management System (SEMS). The method comprising obtaining a dataset of training examples. Each training example includes an input and an output. The input includes ratios representing a configuration of a hybrid power plant (HPP). The ratios include a ratio P^{R}/P^{G} between a production capacity by one or more renewable energy resource P^{R} and a grid connection P^{G}, a ratio B^{P}/P^{G} between a rated battery power B^{P} and the grid connection P^{G}; and a ratio B^{E}/B^{P} between a battery energy capacity B^{E} and the rated battery power B^{P}. The input also includes data representing, for each input variable of a set of input variables, a respective plurality of time series of values of the input variable over a predetermined period. The set of input variables comprises an input variable representing a demand for energy from the grid and one or more input variables each representing power of a respective renewable energy resource. For at least two input variables, the respective pluralities of time series of the at least two input variables stem from different forecasters. The output includes data representing, for each output variable of a set of output variables, a respective plurality of time series of values of the output variable obtained by applying a high-fidelity SEMS to the input. The set of output variables comprises one or more output variables each representing a respective operational parameter of the HPP. The method further comprises training the surrogate model based on the dataset. The method may be referred to as "the learning method".

The learning method may comprise one or more of the following features:
- for each training example, the at least two input variables consist in all the input variables and the different forecasters consist in one respective forecaster per input variable;
- at least for some training examples, the forecasters are different from one example to the other;
- the training examples stem from an initial set of at least two training examples to which different respective sets of forecasters are applied;
- the surrogate model includes a feed-forward neural network (FNN);
- the data representing, for each input variable of the set of input variables, the respective plurality of time series of values of the input variable over a predetermined period, is a truncated result of a singular value decomposition (SVD) applied to a matrix concatenating the pluralities of time series for all the input variables;
- if the set of output variables comprises several output variables, the data representing, for each output variable of the set of output variables, the respective plurality of time series of values of the output variable, is a truncated result of applying a singular value decomposition (SVD) applied to a matrix concatenating the pluralities of time series for all the output variables;
- the singular value decomposition (SVD) is random singular value decomposition (rSVD); and/or
- the surrogate model comprises:
   o a preprocessing function configured to perform SVD; and/or
   o a preprocessing function configured to perform normalization; and/or
   o a postprocessing function configured to perform reverse SVD; and/or
   o a postprocessing function configured to perform reverse normalization.

It is further provided a surrogate model of a SEMS learnable according to the learning method.

It is further provided a computer-implemented method of use of this surrogate model of a SEMS. The method of use is for HPP sizing. The method of use includes using the surrogate model instead of a high-fidelity SEMS model in a HPP sizing process. The method of use may be referred to as "the sizing method".

The sizing method may comprise one or more of the following features:
- the HPP sizing process comprises performing an optimization of a HPP sizing objective function having as free variable the ratios, the objective function having as parameter a uncertainty parameter *zⁱ* representing a set of forecasted instances of the set of input variables, each forecasted instance stemming from a respective set of forecasters, the objective function also having as parameter a measure parameter *z*ₜᵣᵤₑ representing an instance of the set of input variables obtained from physical measurements, the optimization being based on results of applying the surrogate model; and/or
- the optimization is a maximization, and the objective function is of the type: $β ⋅ E \left[PI\left(x, {z}_{true}, {z}^{i}\right)\right] + \left(1-β\right) ⋅ σ \left[PI\left(x, {z}_{true}, {z}^{i}\right)\right] ,$ where x represents the ratios, where *β* is a predetermined constant, where PI(x, w) represents a HPP sizing objective, where *σ*[PI] is the standard deviation of PI, and 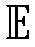 represents the expected value

It is further provided a computer program comprising instructions which, when executed by a computer, cause the computer to perform the learning method and/or the sizing method.

It is further provided a computer readable data storage medium having recorded thereon the computer program and/or the surrogate model.

It is further provided a system comprising a processor coupled to a memory, the memory having recorded thereon the computer program and/or the surrogate model.

It is further provided a device comprising a data storage medium having recorded thereon the computer program and/or the surrogate model.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g*. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG.s 1 to 5 illustrate the methods; and

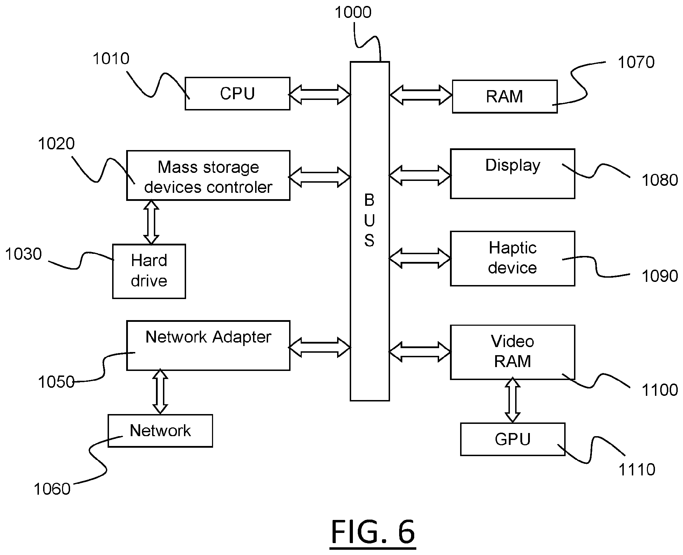

- FIG. 6 shows an example of the system.

### DETAILED DESCRIPTION

It is proposed a computer-implemented method of machine-learning, for learning a surrogate model of an HPP Stochastic Energy Management System (SEMS). The method comprising obtaining a dataset of training examples. Each training example includes an input and an output. The input includes ratios representing a configuration of a hybrid power plant (HPP). The ratios include a ratio P^{R}/P^{G} between a production capacity by one or more renewable energy resource P^{R} and a grid connection P^{G}, a ratio B^{P}/P^{G} between a rated battery power B^{P} and the grid connection P^{G}; and a ratio B^{E}/B^{P} between a battery energy capacity B^{E} and the rated battery power B^{P}. The input also includes data representing, for each input variable of a set of input variables, a respective plurality of time series of values of the input variable over a predetermined period. The set of input variables comprises an input variable representing a demand for energy from the grid and one or more input variables each representing power of a respective renewable energy resource. For at least two input variables, the respective pluralities of time series of the at least two input variables stem from different forecasters. The output includes data representing, for each output variable of a set of output variables, a respective plurality of time series of values of the output variable obtained by applying a high-fidelity SEMS to the input. The set of output variables comprises one or more output variables each representing a respective operational parameter of the HPP. The method further comprises training the surrogate model based on the dataset. The method may be referred to as "the learning method".

The learning method constitutes an improved solution usable for HPP sizing.

Notably, the learning method learns a surrogate model of an HPP (hybrid power plant) Stochastic Energy Management System (SEMS). Such surrogate model, once learnt, is cheaper in use (in terms of computer resources (memory and CPU consumption)) and significantly faster than the actual SEMS, while however providing satisfactory quality in terms of accuracy of the output/result provided by the model. Such model may thus efficiently be used in a sizing optimization process, for optimizing the sizing of a HPP, instead for example of a high-fidelity SEMS which is costly in terms of time and computer resources usage. Furthermore, the surrogate model is trained to account for uncertainties (*e.g*. in weather forecast), as in the input of each training examples, in the data representing the pluralities of time series for the input variables, for at least two input variables, their respective pluralities of times series stem from different forecasters, which models forecast uncertainties so that the model is trained to account for these uncertainties. The surrogate model is thus more efficient in use than a high-fidelity SEMS, while keeping the stochastic character of that SEMS and thereby handling forecast uncertainties.

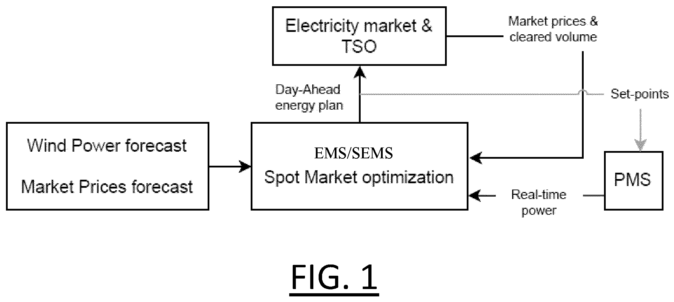

The concept of EMS is known in the fields of hybrid power plants, hybrid power plant modeling, and hybrid power plant simulation. An EMS of an HPP is a numerical model that models the various technologies of the HPP and takes into account the demand for energy from the grid (*e.g*. the market structure) in which the power plant operates, and that predicts based on these elements an operational parameter of the HPP, *i.e.* at least one parameter, which may comprise parameters related to power output, battery charge/discharge, battery energy capacity, curtailed power, or profits. The EMS may communicate with a Power Management System (PMS), as known in the field of HPP. A SEMS is a stochastic EMS, *i.e.* an EMS which accounts for uncertainties, typically in weather and/or price forecasts. FIG. 1 shows a flowchart illustrating an example of a HPP sizing workflow where SEMS/EMS and PMS communicate.

The learning method is a method of machine-learning of a model, which is the surrogate model. As known *per se* from the field of machine-learning, the processing of an input by a model includes applying operations to the input, the operations being defined by data including weight values or parameters. Learning a model (*e.g.* a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning a model based on a dataset", it is meant that the dataset is a learning/training dataset of the model, based on which the values of the weights/parameters are set. In the present disclosure, the training dataset is the obtained dataset of training examples, on which the surrogate model is learnt/trained. In implementations, the training dataset consists of several hundreds of examples each corresponding to a different HPP configuration and/or to several hundreds of different forecast scenarios.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers define the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The learning method comprises obtaining the training dataset, which is the dataset of training examples. Each training example may correspond to a different configuration of a HPP and/or input variables forecast, *i.e.* (*e.g.* at least some of) the ratios and/or (*e.g.* at least some of) the data representing the pluralities of time series vary from one training example to another, and each training example corresponds to a respective configuration of a HPP and/or respective forecast (*i.e.* with respective values for the ratios and/or the data representing the pluralities of time series).

Importantly, for each training example, the input comprises at least two pluralities of time series, respective to at least two of the input variables, which stem from (*i.e.* are obtained from) different forecasters. In other words, this means that, in each training example, in the input of the training example, the time series of values of at least two variables are obtained with different forecasters for each variable. This introduces uncertainties in the inputs, in the training dataset, since different forecasts are combined in each training example.

The at least two input variables may consist in all the input variables and the different forecasters may in this case consist in one respective forecaster per input variable. Thus, in each training example, one different forecaster is used per variable, which further introduces uncertainties in the training dataset, which makes the learnt model even more robust to uncertainties.

Additionally or alternatively, at least for some training examples, the forecasters are different from one example to the other. In other words, at least for some training examples, the set of forecasters used to obtain the time series for these examples is different from one example to the other. This introduces further uncertainties in the training dataset, which makes the learnt model even more robust to uncertainties.

The training examples may for example stem from an initial set of at least two training examples to which different respective sets of forecasters are applied. This provides a pool of available different forecasts. In other words, the initial set comprises initial/basis training examples, for example with values of ratios and/or time series obtained from real-world measured/observed data, or synthetically generated based on real-world data. These initial examples correspond to initial forecast scenarios and HPP configurations. Then, each other training example of the training dataset is obtained by applying a respective set of forecasters (*e.g.* one forecaster per input variable, such that the respective set comprises as many forecasters as input variable) to one initial example, such that said other training example corresponds to a variation of that initial training example (and thus represents uncertainties with respect to the scenario represented by that initial training example).

The forecasters used for obtaining the input time series of the training examples may be machine-learned using two state-of-the-art machine learning methods to represent uncertainties in weather and electricity prices: Time-series Dense Encoder (TiDE) and DLinear. This is further discussed hereinbelow. The method may comprise the learning of these forecasters, *e.g.* at an initial stage of the method.

Each training example of the training dataset includes an input and an output, the output corresponding to the result of applying said high-fidelity SEMS to the input. For each training example, the output is the result of applying to the input a high-fidelity SEMS (*i.e.* a SEMS model which is not a surrogate). The high-fidelity SEMS model may be any suitable SEMS model. For example, the high-fidelity SEMS model may be a SEMS adapted from the one disclosed in reference R. Zhu, K. Das, P. E. Sørensen, A. D. Hansen, Enhancing profits of hybrid wind-battery plants in spot and balancing markets using data-driven two-level optimization, International Journal of Electrical Power and Energy Systems 159 (2024) 110029. doi:10.1016/j.ijepes.2024.110029, which is incorporated herein by reference. The adaptations are discussed hereinafter, when discussing implementations of the learning method. The method may comprise creating or forming the training dataset, or at least training examples thereof, by providing, for each training example to be created, the input, and applying to this input said high-fidelity SEMS to obtain the output. Alternatively, obtaining the training dataset may comprise retrieving (*e.g.* downloading) the training dataset from a (*e.g.* distant) memory or server or database where the dataset has been stored further to its creation.

The training examples in the training dataset may be grouped into sets of training examples. Each set of training examples comprises a same number of training examples, *e.g.* 3. For each set of training examples, the outputs of the set may be the same for all inputs of the set, but the inputs of the sets may vary one from another. Each input of the set may indeed correspond to a different forecast, *i.e.* within the set, the set of forecasters used to obtain the values of the input variables (*e.g.* form one or more initial examples as discussed above) is different from one example to another. However, the values of the ratios may be the same for all examples of the set. Such a set of training examples, *i.e.* corresponding to different inputs with respect to the forecasters used for obtaining the input variables values but to a same output and to same input ratios, may be referred to as a set of forecasts, or yet as an ensemble forecast. In this case, where training examples are grouped into ensemble forecasts, the output may be stored and/or instantiated once and associated to each input of the set, instead of being stored or instantiated repeatedly for each input. The same may hold for the ratios. Furthermore, in this case, the high-fidelity SEMS may be a high-fidelity SEMS configured for computing the output from the set of inputs of an ensemble forecast. The surrogate model is thus in this case trained to also take as input an ensemble forecast and to infer the common output of the examples of the ensemble forecast.

Each input includes several ratios which altogether represent a configuration of a hybrid power plant (HPP). In other words, these ratios altogether form an objective representation of what is the HPP configuration. The ratios may also be referred to as "sizing parameters". The ratios include a ratio P^{R}/P^{G} between a production capacity by one or more renewable energy resource P^{R} and a grid connection P^{G}. The grid connection P^{G} is a variable representing how much power can be sold to the grid in terms of physical limit, for example in MW, *e.g.* within the range [50 MW, 700 MW]. The variable P^{R} represents the capacity (in MW) of power production by one or more energy resources of the HPP. For example, the ratios may comprise a first ratio P^{W}/P^{G}, where P^{W} represents the capacity of production of the wind turbines (also referred to as "wind farm" or "wind power plant" or "wind plant") of the HPP, and/or a second ratio p^{S}/P^{G}, where P^{S} represents the capacity of production of the solar power production units (*e.g.* solar panels) (also referred to as "solar farm" or "solar plant" or "solar power plant") of the HPP. These two ratios may range from 0 to 2 in the training examples, for example from 0.5 to 2, for example from 0.7 to 1,5. The ratios also include a ratio B^{P}/P^{G} between a rated battery power B^{P} (in MW) and the grid connection P^{G}. This ratio may range from 0 to 1 in the training examples, for example from 0 to 0.5, for example from 0 to 0.4. The ratios also include a ratio B^{E}/B^{P} between a battery energy capacity B^{E} (in MWh) and the rated battery power B^{P}. This ratio may range from 1 to 8 in the training examples, for example from 0 to 8, for example from 0 to 6. The rated battery power B^{P} is the power of the battery (or of the set of batteries) of the HPP as defined by the battery's manufacturer, *e.g.* as decided by the inverter rating as known in the art. The battery energy capacity is the actual capacity of the battery (or of the set of batteries) of the HPP, *i.e.* in real-world working conditions. The ratios may vary from one training example to another in the training dataset so as to cover a sufficient number of HPP configurations, for example 200 or 250 training configurations (*e.g.* 200 configurations for training and 50 for testing). Latin Hypercube Sampling (LHS) may be used to ensure an equal distribution of all variables across the entire parameter space.

The input also includes data representing, for each input variable of a set of input variables, a respective plurality of time series of values of the input variable over a predetermined period. The input variables comprise (*e.g.* consist in) an input variable representing a demand for energy from the grid, and one or more input variables each representing power of a respective renewable energy resource. For each input variable, the predetermined period is a time period covered by the plurality of time series altogether, each time series of the plurality corresponding to a respective sub-period of time within the predetermined period. The predetermined period may be a year (*i.e.* 365 consecutive days). Each time series may in this case be respective to a day of this year (*i.e.* there are thus 365 time series). For each input variable, each time series is thus in this case respective to a respective day *d* and represents a series of values of the variable each corresponding to a time of day *d.* For example, there may be such values for every 1 hour in day *d, i.e.* the time step of the series may be 1 hour. The predetermined period is the same for all input variables, and the sub-periods are also the same for all input variables. The renewable resource comprises the wind power production by the wind plant if variable P^{W} is used in the ratios. In this case, the one or more input variable each representing power of a respective renewable energy resource comprise a variable representing power of the wind power production, for example the wind speed variable. Additionally or alternatively, the renewable resource comprises the solar power production by the solar plant if variable P^{S} is used in the ratios. In this case, the one or more input variables each representing power of a respective renewable energy resource comprises one or more variables representing power of the solar power production, for example the direct normal irradiance variable and the diffuse horizontal irradiance variable. The one or more input variables each representing power of a respective renewable energy resource may thus consist in a variable representing power of the wind power production and/or a variable representing power of the solar power production, if variable P^{W} is used and/or if variable P^{S} is used, respectively. The input variables also include an input variable (*e.g.* one input variable) representing a demand for energy (power) from the grid. The input variable may be a stock market (SM) price.

All the input plurality of time series may be concatenated into a same matrix, which may be of the type: ${M}_{in} = \left(\begin{matrix}{W}_{t , norm , 1}^{{HPP}_{n}} & {W}_{t , norm , 2}^{{HPP}_{n}} & … & {W}_{t , norm , 365}^{{HPP}_{n}} \\ {SM}_{t , norm , 1}^{{HPP}_{n}} & {SM}_{t , norm , 2}^{{HPP}_{n}} & … & {SM}_{t , norm , 365}^{{HPP}_{n}}\end{matrix}\right)$ where ${W}_{t , norm , d}^{{HPP}_{n}}$ represents the wind power *(e.g.* wind speed, also noted ${WS}_{t , norm , d}^{{HPP}_{n}}$ ) time series for day *d* and for the HPP configuration n, and ${SM}_{t , norm , d}^{{HPP}_{n}}$ represents the SM electricity prices time series for day *d* and for the HPP configuration *n.* It is to be understood that, if solar power is produced in addition to or alternatively to wind power, corresponding solar power time series ${S}_{t , norm , d}^{{HPP}_{n}}$ are used in addition to ${W}_{t , norm , d}^{{HPP}_{n}}$ (*i.e.* as an additional line in the matrix) or alternatively to ${W}_{t , norm , d}^{{HPP}_{n}}$ (respectively). The corresponding solar power time series may in fact ${S}_{t , norm , d}^{{HPP}_{n}}$ consist into two time series ${DNI}_{t , norm , d}^{{HPP}_{n}}$ and ${DHI}_{t , norm , d}^{{HPP}_{n}}$, which represent, respectively, the direct normal irradiance and the diffuse horizontal irradiance. The input data representing time series may be such same matrix, or a truncated matrix thereof as discussed hereinafter. *Mᵢₙ* may thus be of shape (24x2,365) or (24x3,365), and there may be N training examples and thus N such matrices. In the case where the training examples are grouped into ensemble forecast, the surrogate model may be configured to take as input all matrices *Mᵢₙ* of all inputs of the ensemble.

The output includes data representing, for each output variable of a set of output variables, a respective plurality of time series of values of the output variable, the plurality of time series being obtained by applying a high-fidelity SEMS to the input. As previously explained, a set of training examples forming an ensemble forecast, in the above-discussed case where the model takes such set as input, as a same common output value. The set of output variables may include or consist in one or any combination of (*e.g.* all) the following variables: ${P}_{t , norm}^{sm} = {P}_{t}^{sm} / {P}^{G} , {P}_{t , norm}^{sm , dis} =$ ${P}_{t}^{sm , dis} / {B}^{P} , {P}_{t , norm}^{sm , cha} = {P}_{t}^{sm , char} / {B}^{P} , {P}_{t , norm}^{sm , curt} = {P}_{t}^{sm , curt} / \left({P}^{S}-{P}^{G}\right) , {P}_{t , norm}^{sm , curt} =$ ${P}_{t}^{sm , curt} / \left({P}^{W}-{P}^{G}\right)$, *RevenueOutcomeₜ,* where *RevenueOutcomeₜ* represents the revenue outcome, ${P}_{t}^{sm}$ represents the HPP power output, ${P}_{t}^{sm , dis}$ represents the battery discharging power, ${P}_{t}^{sm , char}$ represents the battery charging power, and ${P}_{t}^{sm , curt}$ represents the HPP curtailed power. A corresponding output time series matrix *Mₒᵤₜ,* constructed as *Mᵢₙ*, may be used, and the data may be this matrix, or a concatenation thereof as discussed hereinafter. The time series of values in the output may correspond to the same predetermined period as in the input time series. However, the time step of the time series in *Mₒᵤₜ* may be equal to the dispatch interval, *e.g.* 1 hour. *Mₒᵤₜ* may thus be of shape (24x1,365), (24x2,365), (24x3,365), (24x4,365), or (24x5,365), and there may be N training examples and thus N such matrices. Alternatively, the output variables may consist in a single variable which is the daily profit, which equals the ratio between cumulated daily energy output and cumulated daily energy bid. This daily profit may be computed from the above-discussed output variables, as known *per se.* The surrogate model may comprise a (deterministic) module or function which computes, as output and from these above-discussed output variables, one plurality of time series of values of the daily profit (*e.g*.one time series per day in a year, with a predefined time-step in each time series (*e.g.* equal to the dispatch interval, *e.g.* 1 hour)) over the predetermined period. Yet alternatively, the surrogate may directly be trained to output this one plurality of time series of values of the daily profit.

The method then comprises training the surrogate model based on the dataset, *i.e.* by inputting to the surrogate model inputs of the training examples and modifying the weights or parameters of the model as long as the model does not provide outputs which correspond sufficiently to the corresponding outputs of the training examples (*e.g.* by optimizing a loss such as MSE loss as known in the art). The surrogate model may include a feed-forward neural network (FNN) configured for approximation of the high-fidelity SEMS, *i.e.* configured to (*i.e.* trained to) map an input example to the corresponding output example that is outputted for this input by the high-fidelity SEMS. As previously explained, the surrogate model may be trained to take as input an ensemble forecast, and in this case to map it to the common output of the inputs of this ensemble forecast.

The method may use a Mean Squared Error (MSE) as the loss function to train the FNN. MSE may be chosen for its effectiveness in capturing the variance of errors. The Adam optimizer or the SGD optimizer may be used for training the FNN, with for example a learning rate of 10⁻⁴, 10⁻³ or 10⁻². The training of the surrogate model may be based on a dataset comprising various HPP configurations (defined with the ratios discussed above), each distinguished by unique sizing parameters. The FNN may have the following hyperparameters: number of layers, number of neurons per layer, batch size. The method may comprise, after the training, of fine tuning of these hyperparameters to obtain the best model, as known in the art. Hyperband, which uses random sampling of hyperparameters to explore a wide range of settings, may be used for the fine tuning. The FNN may comprise a rectified linear unit (ReLu) activation function for all hidden layers and, for the output layer, a linear activation function. ReLu is an appropriate activation function for the training data, particularly following the normalization process, as all input and output time series become non-negative. The number of hidden layers may be comprised between 1 and 8 (step 1), and the number of neurons per hidden layers may be comprised between 64 and 1280 (step 64). The training may be a batch training, and the batch size may equal 32, 64 or 128. The tuning process aims to evaluate several thousands of FNN architectures. To avoid a computationally expensive process, these FNN may not be trained until they converge. Instead, the best-performing model, from the tuning process, may be selected for further training.

The data representing, for each input variable of the set of input variables, the respective plurality of time series of values of the input variable over a predetermined period, may be a truncated result of a singular value decomposition (SVD) applied to a matrix concatenating the pluralities of time series for all the input variables. The method may apply the SVD to this concatenating matrix (*e.g.* the matrix *Mᵢₙ*), which results in a matrix of the principal components of this concatenating matrix (e.g. denoted *Zᵢₙ*) and truncate the principal component matrix with a truncation level *rᵢₙ*. In implementations, *rᵢₙ* = 200. The input layer of the FNN may in this case have a number of neurons equal to *rᵢₙ*+ number of input ratios. The SVD may be a random SVD (rSVD).

The surrogate model may in this case comprise a preprocessing function configured to perform SVD (or rSVD, where appropriate). This function is any function that can take as input a matrix and output a SVD of this matrix. This allows input to the surrogate model the concatenating matrix (*e.g. Mᵢₙ*) and to obtain a SVD thereof, which may then be truncated with a truncation level *rᵢₙ* as discussed above.

Additionally or alternatively, if the set of output variables comprises several output variables, the data representing, for each output variable of the set of output variables, the respective plurality of time series of values of the output variable, may be a truncated result of applying a singular value decomposition (SVD) applied to a matrix concatenating the pluralities of time series for all the output variables. The method may apply the SVD to this concatenating matrix (*e.g.* the matrix *Mₒᵤₜ*), which results in a matrix of the principal components of this concatenating matrix (*e.g.* denoted *Zₒᵤₜ*) and truncate the principal component matrix with a truncation level *rₒᵤₜ.* The output layer of the FNN may in this case have a number of neurons equal to *rₒᵤₜ.* The SVD may be a random SVD (rSVD). It is understood that, if there is only one output variable (*e.g*. daily profit), the data representing the plurality of time series of values of that output variable may be a vector encoding this plurality of time series and to which no SVD or rSVD has been applied.

The surrogate model may in this case (*i.e*. where the output data is the truncated result of a SVD) comprise a postprocessing function configured to perform reverse SVD (or reverse rSVD where appropriate). This function is any function that can take as input a matrix and output a reverse SVD of this matrix. This function is any function configured for reversing the SVD performed by said preprocessing function configured to perform SVD of an input of the surrogate model. This allows reverse SVD the output of the surrogate model to thereby obtain a concatenating matrix similar to those in the outputs in the training examples (*e.g. Mₒᵤₜ*).

Using truncated matrices resulting from a SVD allows to have cheaper input data in terms of memory and computing resources used, both during training and use of the surrogate. This improves the performance of the training and use stages (from the viewpoint of computer resources usage).

The surrogate model may comprise a preprocessing function configured to perform normalization. This function may normalize each term in the input time series so that they scale between zero and one. This function may for example normalize the wind power time series *Wₜ* or solar power time series *Sₜ* by dividing with the turbine's rated power. This function may also divide the spot market price time series *SMₜ* by dividing by the maximum price.

The surrogate model may comprise a postprocessing function configured to perform reverse normalization. This function may for example perform the following reverse normalization (*i.e*. in the case where the following variables are the output variables): ${P}_{t}^{sm} = {P}_{t , norm}^{sm} ∗ {P}^{G} , {P}_{t}^{sm , dis} = {P}_{t , norm}^{sm , dis} ∗ {B}^{P} , {P}_{t}^{sm , char} = {P}_{t , norm}^{sm , cha} ∗ {B}^{P}$*,* ${P}_{t}^{sm , curt} = {P}_{t , norm}^{sm , curt} ∗ \left({P}^{S}-{P}^{G}\right) , {P}_{t}^{sm , curt} = {P}_{t , norm}^{sm , curt} ∗ \left({P}^{W}-{P}^{G}\right)$*.* The reverse normalization is however actually performed on the corresponding time series for these terms. In the case where the output is a single variable which is the daily profit, the reverse normalization is ${T}_{d}^{rev} = {T}_{d , norm}^{rev} ∗ {T}_{max}^{rev}$ where ${T}_{d}^{rev}$ is the daily revenue for day d, ${T}_{d , norm}^{rev}$ is the normalized daily revenue for day d (i.e., output of the surrogate model) and ${T}_{max}^{rev}$ is the maximum possible daily revenue expressed as ${T}_{max}^{rev} =$ *SMₘₐₓ .P^{G}.T* where *SMₘₐₓ* is the maximum spot market price from the historical dataset and *T* is number of hours within a day (e.g., 24 hours).

The surrogate model may thus consist of the composition (in this order, *i.e.* the functions are applied to an input in this order) of: the preprocessing function that performs the normalization, the FNN, and the postprocessing function that performs the reverse normalization. Alternatively, the surrogate model may consist of the composition (in this order, *i.e.* the functions are applied to an input in this order) of: the preprocessing function that performs the normalization, the preprocessing function that performs SVD, the FNN, the postprocessing function that performs the reverse SVD (where appropriate), and the postprocessing function that performs the reverse normalization. In any case, only the FNN may be trained with the training examples, the other functions being deterministic functions. Alternatively, the functions that perform SVD or reverse SVD may be trained SVD transformation and reverse transformation, of which method may comprise the training.

Implementations of the learning method are now discussed.

In these implementations, for each training example, the ratios may be represented by a variable *x* = (P^{R}/P^{G}, B^{P}/P^{G}, B^{E}/B^{P}). As previously explained, P^{R} may equal P^{W}, or may equal P^{S}, or may equal (P^{W}, P^{S}). For the sake of simplicity, this last case where P^{R} equals (P^{W}, P^{S}) will be considered for discussing the implementations, but it is understood that the discussion applies, mutatis mutandis, to the other cases. The input variables in these implementations are then the wind speed *WS,* the direct normal irradiance *DNI,* the diffuse horizontal irradiance *DHI,* and the spot maker electricity price *SM.* For each training example, each one of these four variables is generated (*i.e.* its time series of values are generated) by a different forecaster (*i.e.* one per variable), and the set of four forecasters for the four variables differs from one training example to the other. The training examples are grouped into ensemble forecasts noted *zⁱ*, with ${z}^{i} = \left\{{z}_{k}:k∈{J}_{n}^{i}⊆\left\{1,…,N\right\}\right\} ,$ where ${J}_{n}^{i}$ is the set of indices corresponding to the *n* forecasts in the set (in examples *n* = 3), *i* corresponding to a (*e.g.* user-inputted) seed number ), and *zₖ =* {*WSₖ, DNIₖ, DHIₖ, SMₖ*} is the *k*^{th} forecast (forecasted values of the time series for the variables *WSₖ, DNIₖ, DHIₖ, SMₖ*) among the set of available forecasts. In tests, the inventors selected *n* = 3 forecasts for each *i,* and selected N=200. Thus, a total of 800 forecasters were used, with 200 forecasters per variable.

As previously explained, the high-fidelity SEMS used to compute the outputs from the inputs may be adapted from the one disclosed in previously-cited reference R. Zhu, K. Das, P. E. Sørensen, A. D. Hansen, Enhancing profits of hybrid wind-battery plants in spot and balancing markets using data-driven two-level optimization, International Journal of Electrical Power and Energy Systems 159 (2024) 110029. doi:10.1016/j.ijepes.2024.110029. The adaptations notably include adaptation to include solar power production. Unlike a deterministic EMS (DEMS), the SEMS takes an ensemble of *n* forecasts (or one ensemble of forecast set *zⁱ* for a given *i*) as input, enabling the optimization of dispatch strategies under uncertainty. In examples, the SEMS considers, for each input, three forecasts (n = 3) and one HPP configuration. The day-ahead dispatch strategy of the SEMS may be formulated as a two-stage stochastic problem. The first stage of the SEMS determines the optimal dispatch strategy that maximizes revenues across all forecast sets. In contrast, the second stage ensures that all physical constraints are satisfied for each forecast (i.e., scenario). The SEMS objective function maximizes the expected revenue while accounting for deviations between forecasted and actual power outputs. It is expressed as:

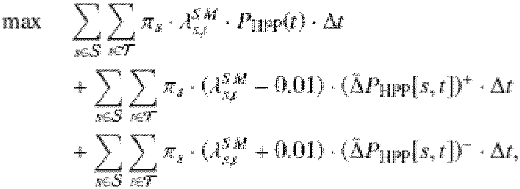

In this equation, the first term represents the expected revenue from spot market participation, where *πₛ* is the probability of scenario *s,* ${λ}_{s , t}^{SM}$ is the spot market price for scenario *s* at hour *t.* The product is summed across all scenarios (*s* ∈ 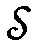 ) and all time intervals (*t* ∈ 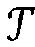 )*.* The second term introduces the economic impact of positive deviations from the forecasted power output. These deviations, represented by (Δ̃P_{HPP}[*s, t*])*⁺* ,correspond to the surplus power delivered at hour *t* in scenario *s* and are weighted by a reduced market price, ${λ}_{s , t}^{SM} - 0.01$*.* This reduction reflects potential penalties or discounts for over-delivery of power. The third term models the effect of negative deviations, where (Δ̃P_{HPP}[*s, t*])⁻ represents the shortfall in power delivery relative to the forecast. These deviations are penalized with an adjusted market price, ${λ}_{s , t}^{SM} + 0.01$*,* which includes an additional cost for under-delivery. In both the second and third terms, the piecewise nature of the deviations is captured using (Δ̃P_{HPP}[*s, t*])*⁺* = max (Δ̃P_{HPP}[*s, t*]*,* 0) for positive deviations and (Δ̃P_{HPP}[*s, t*])*⁻* = max (-Δ̃*P*_{HPP}[*s*, *t*], 0) for negative deviations. As the DEMS model is the deterministic equivalent of the SEMS model, they share the same constraints; however, unlike the SEMS model, only the first-stage variables and constraints are to be considered for the DEMS model.

Implementations of the detailed constraints and full formulation of the SEMS model are now described:

### Indices and Sets

- *t* ∈ {0, 1, ..., *T* - 1}: Hours (with *T* total hours).
- *s* ∈ *S*: Scenarios, with probability *πₛ*.

### Parameters

- *E*ₘₐₓ: Maximum energy capacity.
- *SoC*ₘᵢₙ and *SoC*ₘₐₓ: Minimum and maximum allowabl state-of-charge (expressed as fractions of *E*ₘₐₓ).
- *SoC*₀: Initial state-of-charge (fraction of *E*ₘₐₓ).
- *Pb*ₘₐₓ: Maximum power for charging or discharging.
- *P*_{grid}: Grid power limit.
- *η*_{cha}: Charging efficiency of battery.
- *η*_{dis}: Discharging efficiency of battery.
- *η*ₗₑₐₖ: Leakage (loss) rate per hour.
- ${λ}_{s , i}^{SM}$: Spot market price for scenario *s* at hour *t*.

### Decision variables

### First stage (here-and-now decisions):

- *P*_{HPP}(*t*): Scheduled power injection (net dispatch) into the grid at hour *t*.
- *P_{W}*(*t*)*, P_{S}*(*t*): Scheduled wind and solar power at hour *t*.
- *P_{dis}*(*t*): Scheduled discharging power at hour *t*.
- *P_{cha}*(*t*): Scheduled charging power at hour *t*.
- *Bₚ*(*t*): Net battery power at hour *t*, defined as 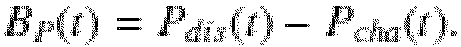
- *E*(*t*): State-of-charge (SoC) at hour *t*.
- *η*(*t*) ∈ {0, 1}: Binary variable indicating battery mode at hour *t*; by convention, we set *η*(*t*) = 1 when the battery is in discharging mode and *η*(*t*) = 0 when charging.

### Second stage (recourse decisions, for each scenario s):

- ${P}_{W}^{-} \left(t, s\right) , {P}_{S}^{-} \left(t, s\right)$: Real-time wind and solar power at hour *t* in scenario *s*.
- ${P}_{dis}^{-} \left(t, s\right)$: Real-time discharging power at hour *t* in scenario *s*.
- ${P}_{cha}^{-} \left(t, s\right)$: Real-time charging power at hour *t* in scenario *s*.
- ${B}_{P}^{-} \left(t, s\right)$: Net battery power in real time at hour *t* for scenario *s,* defined as 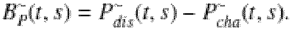
- *E^{~}*(*t, s*): Real-time state-of-charge at hour *t* in scenario *s*.
- *η*^{~}(*t*, *s*) ∈ {0, 1}: Binary variable indicating battery made at hour *t* in scenario *s*; by convention, we set *η^{~}*(*t, s*) *=* 1 when discharging and 0 when charging.
- *δ*^{~} (*t, s*): Power imbalance at hour *t* in scenario *s*, defined as the deviation from the scheduled injection.

### Constraints

### First-stage constraints:

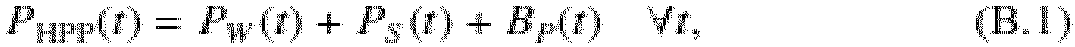

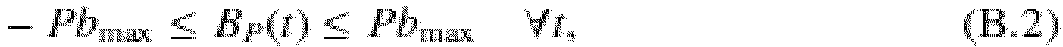

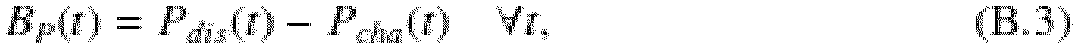

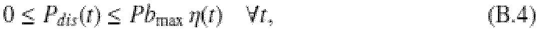

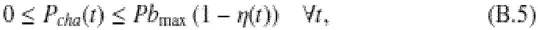

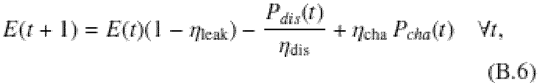

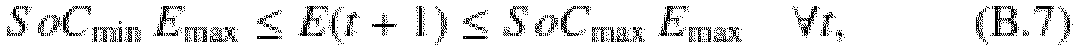

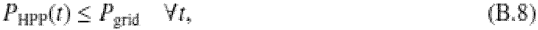

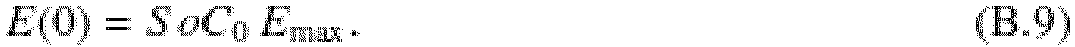

### Second-Stage constraints:

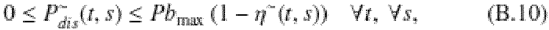

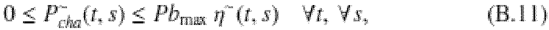

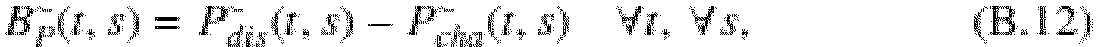

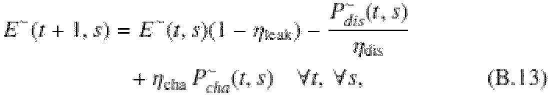

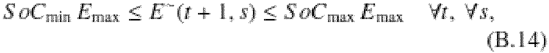

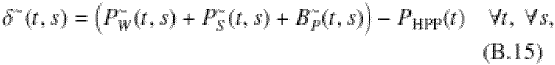

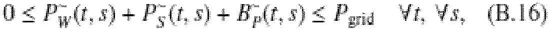

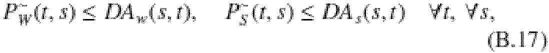

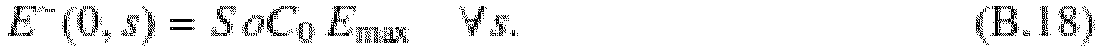

### Explanation of the formulation

The problem formulation is structured in two stages. The first stage defines the scheduled operation before uncertainty is realized, while the second stage captures the recourse actions under different scenarios.

In the first-stage, the scheduled grid injection *P_{HPP}*(*t*) is defined by Equation (B.1) as the sum of the scheduled wind *P_{W}*(*t*)*,* solar *P_{V}*(*t*), and net battery power *B_{P}*(*t*)*.* Equation (B.2) ensures that the net battery power is kept within the bounds *-Pbₘₐₓ* and *Pbₘₐₓ.* The definition of *B_{P}*(*t*)*.* is provided in Equation (B.3) as the difference between the discharging power *P_{dis}*(*t*)*.* and the charging power *P_{cha}*(*t*).

Equations (B.4) and (B.5) impose bounds on *P_{dis}*(*t*) and *P_{cha}*(*t*) by linking them to the binary variable *η*(*t*)*.* This binary variable enforces that the battery operates in one mode only-when *η*(*t*) *=* 1 the battery is in discharging mode (allowing *P_{dis}*(*t*) up to *Pbₘₐₓ*), and when *η*(*t*) *=* 0 it is in charging mode (allowing *P_{cha}*(*t*) up to *Pbₘₐₓ*). The evolution of the state-of-charge is described in Equation (B.6), which accounts for leakage, discharging losses (scaled by *η_{dis}*), and charging gains (scaled by *η_{cha}*). The battery's state-of-charge is also constrained by the minimum and maximum limits in Equation (B.7). Equation (B.8) restricts the scheduled grid injection to the grid capacity *P_{grid},* and the initial condition is set in Equation (B.9).

In the second stage, which is scenario-dependent, the real-time discharging ${P}_{dis}^{∼} \left(t, s\right)$ and charging ${P}_{cha}^{∼} \left(t, s\right)$ powers are bounded by Equations (B.10) and (B.11), respectively, with the binary variable *η^{~}*(*t*,*s*) ensuring mutually exclusive operation. The net real-time battery power ${B}_{P}^{∼} \left(t, s\right)$ is defined in Equation (B.12). The evolution of the real-time state-of-charge is given by Equation (B.13), and its limits are enforced by Equation (B.14). The power imbalance *δ^{~}*(*t*, *s*) , which represents the deviation between the actual real-time injection and the scheduled injection, is defined in Equation (B.15). The total real-time injection (wind, solar, and net battery) is further constrained by the grid limit in Equation (B.16). Finally, Equation (B.17) ensures that the real-time renewable outputs do not exceed their forecasted availabilities, and the initial condition for the state of charge in each scenario is set in Equation (B.18).

To apply the SEMS, a real-time optimization problem formulated as a MIQP may be solved each hour during the day *d.* This real-time dispatch optimization minimizes financial penalties arising from deviations between forecasted and actual conditions (e.g., *zₜᵣᵤₑ*). In this framework, the day-ahead optimization (DEMS or SEMS) provides energy set points. At the same time, the real-time dispatch uses these set points and real-time measurements to calculate deviations and apply penalties. The objective function of the real-time optimization is defined as:

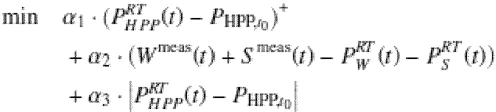

The objective function is designed to minimize penalties associated with deviations in the real-time operation of an HPP. The formulation includes three terms collectively addressing over-delivery, alignment with available resources, and deviations from committed power.

In this equation, ${P}_{HPP}^{RT} \left(t\right)$ represents the total real-time power output from the HPP at time *t,* while *P*_{*HPP,t*₀} denotes the committed power level at the start of the time period *t*₀. The measured wind and solar power available at time *t* are represented by *W^{meas}*(*t*) and *S^{meas}*(*t*), respectively. Similarly, ${P}_{W}^{RT} \left(t\right)$ and ${P}_{S}^{RT} \left(t\right)$ represent the real-time wind and solar power dispatched by the HPP.

The first term of the equation, ${α}_{1} ⋅ {\left({P}_{HPP}^{RT}\left(t\right)-{P}_{HPP , {t}_{0}}\right)}^{+}$, penalizes over-delivery, where the real-time power exceeds the committed level. A high penalty weight of *α*₁ = 10 is applied to discourage over-delivery. The second term, *α*₂ · $\left({W}^{meas}\left(t\right)+{S}^{meas}\left(t\right)-{P}_{W}^{RT}\left(t\right)-{P}_{S}^{RT}\left(t\right)\right)$*,* encourages the alignment of dis-patched wind and solar power with the measured available wind and solar resources. Here, the weight *α*₂ = 1 reflects moderate importance, ensuring that the dispatched power matches the renewable resource availability without overshadowing the penalties for over-delivery or deviations. The third term, ${α}_{3} ⋅ \left|{P}_{HPP}^{RT}\left(t\right)-{P}_{HPP , {t}_{0}}\right|$, penalizes absolute deviations-whether positive or negative-from the committed power level. This term, with a smaller weight of *α*₃ = 0.5, ensures some flexibility in operation while avoiding excessive deviations from the committed power. Overall, the objective function balances the competing priorities of limiting over-delivery, aligning dispatched power with available resources, and managing deviations from commitments. The weights (*α*₁*, α*₂, *α*₃) are chosen to reflect the relative importance of these operational goals, with the highest priority given to preventing over-delivery, followed by alignment with resource availability and managing deviations. The detailed constraints and complete formulation of the real-time dispatch model are similar to the control logic presented in reference R. Zhu, K. Das, P. E. Sørensen, A. D. Hansen, Optimal participation of co-located wind-battery plants in sequential electricity markets, Energies 16 (2023). URL: https://www.mdpi.com/1996-1073/16/15/5597. doi:10.3390/en16155597, which is incorporated herein by reference. For completeness, these constraints and formulation details are summarized herein. Specifically:

### Parameters

- *E*ₘₐₓ: Maximum energy capacity.
- *SoC*ₘᵢₙ and *SoC*ₘₐₓ: Minimum and maximum allowable state-of-charge (as fractions of *E*ₘₐₓ).
- *Pb*ₘₐₓ: Maximum charging or discharging power.
- *P*_{grid}: Grid power limit.
- *η*_{cha}: Charging efficiency of the battery.
- *η*_{dis}: Discharging efficiency of the battery.
- *η*ₗₑₐₖ: Leakage (loss) rate of the battery.
- *SoC*₀: Current state-of-charge (fraction) at the start of this interval.
- *W*^{meas}(*t*): Available real-time wind power in this interval.
- *S*^{meas}(*t*): Available real-time solar power in this interval.
- *P*_{HPP,r₀}: Previously scheduled power bidding from the SEMS model at this interval. Used in objective function only.
- *α*₁, *α*₂, *α*₃: Penalty weights in the objective.

### Decision variables

- ${P}_{W}^{RT} \left(t\right)$: Real-time wind power dispatched.
- ${P}_{S}^{RT} \left(t\right)$: Real-time solar power dispatched.
- ${P}_{HPP}^{RT} \left(t\right)$: Real-time net injection to the grid.
- ${P}_{dis}^{RT} \left(t\right)$: Real-time discharging power of the battery.
- ${P}_{cha}^{RT} \left(t\right)$: Real-time charging power of the battery.
- ${B}_{P}^{RT} \left(t\right)$: Net battery power, defined by 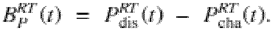
- SoC(0) and SoC(1): State-of-charge at the start and end of the interval.
- *η^{RT}*(*t*) ∈ {0, 1}: Binary variable indicating battery mode:
   *η^{RT}*(*t*) = 1 (discharging), *η^{RT}*(*t*) *=* 0 (charging).

### Constraints

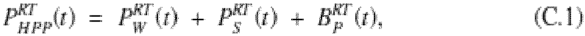

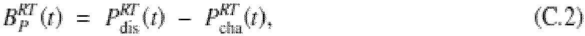

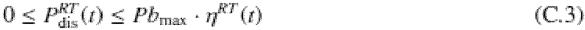

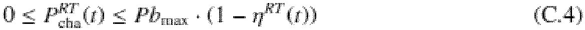

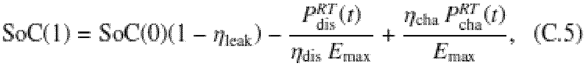

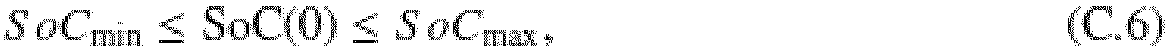

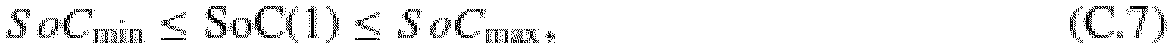

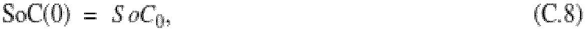

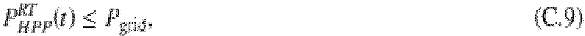

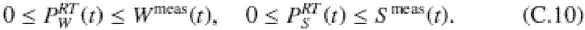

After running the real-time optimization for a full day, the daily profits Π*_{d}* may be computed by the SEMS as:

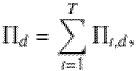

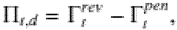

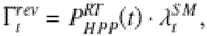

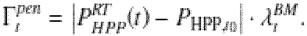

Here Π*_{d}* represents the total daily profit obtained by summing the hourly profit Π *_{t,d}*. Each hourly profit is defined as the revenue ${Γ}_{t}^{rev}$ earned from selling electricity in the spot market minus the penalty ${Γ}_{t}^{pen}$ incurred for deviations from the scheduled dispatch. The revenue at hour *t* is given by the real-time dispatched power ${P}_{HPP}^{RT} \left(t\right)$ multiplied by the spot market price ${λ}_{t}^{SM}$*.* The penalty accounts for deviations from the scheduled power *P*_{*HPP,t*₀} and is computed as the absolute deviation multiplied by the balancing market price ${λ}_{t}^{BM}$. This formulation captures both economic gains from electricity sales and costs from imbalances. The SEMS may be implemented and solved using IBM Decision Optimization Studio CPLEX via the docplex Python library (see reference IBM Decision Optimization, Ibm decision optimization cplex modeling for python (docplex), https://github.com/ IBMDecisionOptimization/docplex-doc, 2022. Accessed: January 15, 2025, which is incorporated herein by reference). The computations are executed on DTU's high-performance computing (HPC) cluster, Sophia (see reference Technical University of Denmark, Sophia hpc cluster, 2019. URL: https://dtu-sophia.github.io/docs/. doi:10.57940/FAFC-6M81, which is incorporated herein by reference).

As previously discussed, in implementations, the forecasts (*i.e.* the time series of values of the input variables) are generated using two state-of-the-art machine learning methods to represent uncertainties in weather and electricity prices: Time-series Dense Encoder (TiDE) and DLinear.

The TiDE model, discussed in reference A. Das,W. Kong, A. Leach, S. K. Mathur, R. Sen, R. Yu, Long-term forecasting with tiDE: Time-series dense encoder, Transactions on Machine Learning Research (2023). URL: https://openreview.net/forum? id=pCbC3aQB5W, which is incorporated herein by reference, is a multi-layer perceptron (MLP)-based encoder-decoder architecture designed for time-series forecasting. It captures non-linear dependencies and incorporates dynamic covariates, making it versatile. TiDE has demonstrated superior or comparable performance on widely used forecasting benchmarks, achieving over 10% lower Mean Squared Error (MSE) on the largest dataset compared to prior neural network-based models. Moreover, TiDE is computationally efficient, being 5x faster in inference and over 10x faster in training compared to Transformer-based models.

The DLinear model, discussed in reference A. Zeng, M. Chen, L. Zhang, Q. Xu, Are transformers effective for time series forecasting?, Proceedings of the AAAI Conference on Artificial Intelligence 37 (2023) 11121-11128. URL: https: //ojs.aaai.org/index.php/AAAl/article/view/26317. doi:10. 1609/aaai.v37i9.26317, which is incorporated herein by reference, decomposes the raw input data into two components: a trend component (using a moving average kernel) and a remainder component (representing seasonality). Separate linear layers are applied to each component, and their outputs are summed to generate the final prediction. This explicit handling of trend and seasonality enhances DLinear's ability to capture complex temporal dynamics. Comparative evaluations on widely used datasets highlight its effectiveness, with DLinear achieving the best performance on the "Electricity" dataset and ranking among the top models for the "Weather" dataset.

For each time-series variable (WS, DNI, DHI, SM) and for a given seed number, one forecaster from each model (TiDE and DLinear) is trained following the same scheme. The training process uses all available hourly data up to and including the previous month (*m* - 1). Predictions are then generated for each day (24 hours) of the current month (*m*) using the latest available data. For example, to predict day 4 of month *m,* the forecaster is trained on data spanning from the beginning of the dataset up to the last day of month *m* - 1. During the prediction process, the forecaster is provided information from the first three days of month *m* to make predictions for day 4. This ensures that each daily forecast is generated using the most up to date and relevant data available. The method may use the implementation from reference K. G. Olivares, C. Chall'u, F. Garza, M. M. Canseco, A. Dubrawski, Neural-Forecast: User friendly state-of-the-art neural forecasting models., Py-Con Salt Lake City, Utah, US 2022, 2022. URL: https://github. com/Nixtla/neuralforecast, which is incorporated herein by reference, for both models.

For a given HPP configuration, the weather time series are converted into power time series using the methodology outlined in reference J. P. M. Leon, H. Hab-bou, M. Friis-Møller, M. Gupta, R. Zhu, K. Das, HyDesign: A tool for sizing optimization of grid-connected hybrid power plants including wind, solar photovoltaic, and lithium-ion batteries, Wind Energy Science 9 (2024) 759-776. doi:10.5194/wes-9-759-2024, which is incorporated herein by reference. Wind power time series are generated using a wind power plant model based on a specified wind turbine type; however, these implementations do not consider wake losses. Similarly, solar power time series are derived from a solar power plant model requiring specific inputs. These wind turbine characteristics and the solar-related inputs are fixed for these implementations.

In implementations, the surrogate model comprises two main components: a data pre-processing method and a regression model. The preprocessing step involves scaling (normalizing) the input data to ensure all inputs contribute equally to the model's outputs, thereby aiding the convergence of the surrogate's algorithm. Additionally, this step extracts critical features from the input time series. The regression model replicates the behavior and results of the SEMS model.

In implementations, the surrogate model takes as inputs *n* forecast sets (an ensemble of *n* forecasts) comprising time series data for electricity prices, wind generation, and solar generation, along with a representation of the corresponding HPP configuration, as defined by the ratios (previously discussed variable *x*). These inputs are identical to those used in the SEMS model. The surrogate model estimates daily profits, *Π_{d},* for each given day *d* of a predetermined period (*e.g.* the same predetermined period as that of the inputs, *e.g.* a year), based on the inputs of the SEMS model.

The input time series are normalized to ensure consistency across varying HPP configurations. The forecasted wind and solar generation time series are divided by the installed capacities of wind (W) and solar (S) for the corresponding HPP configuration. Similarly, forecasted electricity prices are normalized by dividing them by the maximum electricity price ${λ}_{max}^{SM}$, obtained from the real-time data (*zₜᵣᵤₑ*).

The surrogate model outputs normalized daily profits, Π*_{d}*, which are scaled by the maximum possible daily revenue, ${Γ}_{max}^{rev}$ The maximum revenue is calculated as: ${Γ}_{max}^{rev} = {\sum }_{t}^{T} {λ}_{max}^{SM} ⋅ G$, where *T* is the total number of hours in a day (e.g., 24 hours), and *G* is the grid connection limit.

These normalized input time series are then segmented into snapshots and features, which are processed using randomized Singular Value Decomposition (rSVD) based on the method from reference N. Halko, P. G. Martinsson, J. A. Tropp, Finding structure with randomness: Probabilistic algorithms for constructing approximate matrix decompositions, SIAM Review 53 (2011) 217-288. doi:10.1137/090771806, which is incorporated herein by reference and implemented in the Dask library (discussed in reference M. Rocklin, Dask: Parallel computation with blocked algorithms and task scheduling, in: K. Huff, J. Bergstra (Eds.), Proceedings of the 14th Python in Science Conference, 2015, pp. 130 - 136, which is incorporated herein by reference ). This approach efficiently reduces the dataset's dimensionality while minimizing computational memory requirements, as calculating the full SVD for large datasets is resource-intensive. A truncation level of 200 modes may be for example used in this study.

Each rSVD input snapshot consists of daily time series data, where the features correspond to hourly values for each time series variable (normalized forecasted wind generation, normalized forecasted solar generation, and normalized forecasted electricity prices) across all forecast sets. To reduce the impact of forecast set ordering and enrich the dataset, n! permutations of each snapshot may be introduced, where the order of forecast sets is systematically altered. This permutation technique enhances the robustness and diversity of the dataset.

The rSVD decomposition produces three matrices: the left singular matrix (*U*), the diagonal matrix (*Σ*), and the rightsingular matrix (*V^{T}*). The matrix *U* captures the dominant daily patterns in the time series across the dataset. At the same time, *V^{T}* describes each day's contribution to these patterns, effectively capturing how wind generation, solar generation, and electricity prices vary over the year. The diagonal matrix *Σ* quantifies the importance of each pattern, indicating how much variance in the data is explained by each pattern.

After normalizing the training dataset and applying rSVD, the three decomposed matrices are utilized. The *U* matrix is used to project new data (i.e., from the validation dataset) into the reduced feature space, allowing it to be input to the regressor for predicting normalized daily profits. Meanwhile, the product (*Σ · V^{T}*)*^{T}* is used to construct the training dataset. To complete the training dataset, this matrix is concatenated with the corresponding HPP configuration (previously discussed variable *x*) for each snapshot. The resulting matrix is then used to train the regression model (FNN).

In the discussed implementations, the regression model (FNN) aims to map the coefficients of the truncated principal component matrix (representing daily normalized input time series) and HPP configurations to daily normalized profits. The FNN training process involves in implementations two stages: tuning and training. During the tuning stage, the model's architecture and hyperparameters are optimized to identify the best-performing architecture, but the network is not trained to complete convergence. Once the optimal architecture is selected, the training stage focuses on fully training this architecture-either for an extended duration or until convergence-to achieve improved inference accuracy. The table provides tested examples of the hyperparameter tuning process details. At the training stage, the best-performing model of the tuning process is trained for twice the tuning epochs (e.g., 300 epochs).

| **Hyperparameter** | **Details** |
|---|---|
| Layers | 1 to 8 (step 1) |
| Neurons per layer | 64 to 1280 (step 64) |
| Learning rate | 1e-4 to 1e-2 (log scale) |
| Batch size | {32, 64, 128} |
| Optimizer | {SGD, Adam} |

To evaluate the surrogate model's reliability in predicting daily profits and calculating the profitability of HPPs for unseen configurations, the inventors have validated its performance using data outside the training set. This validation involves comparing the *PI* obtained from profits generated by the HF SEMS with the *PI* estimated using the surrogate's model outputs. *PI* is the profitability index and is defined by the ratio between the NPV (net present value) and the CAPEX, *i.e. PI =* NPV/CAPEX. Unique HPP configurations, distinct from those used during training, have been employed to test the model's generalizability. The accuracy of the surrogate model is quantified using the root mean squared error (RMSE), *ε_{RMSE},* which measures the difference between observed and predicted *PI* values: ${ϵ}_{RMSE} = \sqrt{\frac{1}{J} {\sum }_{j = 1}^{J} {\left({PI}_{j}-{\hat{PI}}_{j}\right)}^{2}}$ where *PIⱼ* represents the observed PI from the high-fidelity SEMS and ${\hat{PI}}_{j}$ is the PI predicted by the surrogate for the j-th configuration, and *J* is the number of configurations tested. Additionally, the surrogate model's efficiency is evaluated by comparing the computation time required to determine the PI across all validation scenarios with the high-fidelity SEMS model.

Since surrogate models inherently approximate the true system behavior, they exhibit errors and biases. To mitigate the impact of these biases on the optimization results, implementations incorporate the systematic error of the surrogate model directly into its output. Specifically, after evaluating the error distribution for the PI-denoted by *ε_{PI}* - PI is adjusted by subtracting the surrogate model's mean error *ε̅_{PI}.* This assumes that the distribution of error on the PI is Gaussian or Gaussian-like, an assumption that has been verified by the inventors.

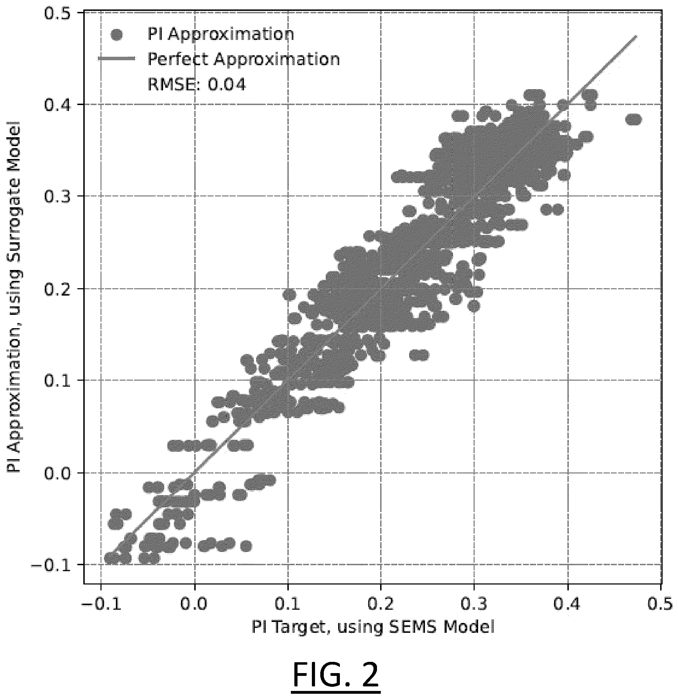

The results of the validation tests are shown on FIG. 2 compares the surrogate's PI approximation (vertical axis) with the corresponding reference values from the SEMS model (horizontal axis) for the validation. Each point represents the 25-year lifetime PI for a single HPP configuration. The line represents a model with a perfect approximation. The surrogate model's results are computed after correcting for the mean bias of the NN. This bias term is a constant, based on the validation.

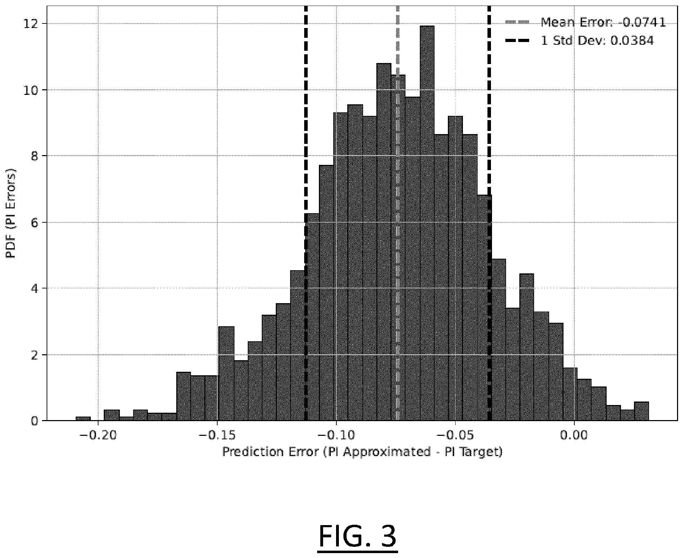

The mean bias correction, is now explained. FIG. 3 displays the distribution of PI approximation errors (*ε_{PI}*) on the validation dataset before the mean bias correction. The errors follow a Gaussian pattern with a negative mean, indicating a systematic underestimation of PI. Notably, the mean error is roughly one order of magnitude smaller than typical PI values. Because the model errors are approximately Gaussian, the surrogate model's outputs can be systematically adjusted by subtracting the mean error *ε̅_{PI}.* The term *ε̅_{PI}* corresponds to the mean bias correction.

It is also provided a surrogate model of a SEMS learnable according to the learning method, that is a computer-implemented function that forms a surrogate model of a SEMS with the surrogate model having weights or parameters with values equal to the values that would have been set by the learning method. For example, the surrogate model may be the surrogate model that directly results from the learning method, *i.e.* having the architecture discussed above and having weights or parameters of which values have been set by the training step of the learning method.

It is also provided a computer-implemented method of use of this surrogate model. The method of use is for HPP sizing, *i.e.* it implements a HPP sizing process. HPP sizing refers to the task of determining a sizing of the HPP, including determining types and quantities of renewable and non-renewable power production units and of batteries based on one or more objective criteria (*e.g.* optimization of an objective function related to power production). For that, the HPP sizing process may determine optimal values of the sizing parameters (*i.e.* that optimizes an objective sizing function), based on which said types and quantities of technologies may directly be inferred as known in the art. A HPP sizing process is a process that performs such a task. The method includes using the surrogate model instead of a high-fidelity SEMS model in the HPP sizing process. This provides speed and computer-efficiency for the process. As previously said, the method of use may be referred to as "the sizing method". The methods may be integrated into a same computer-implemented method that comprises performing the learning method and then the sizing method using the surrogate trained by the learning method.

The sizing method is now further discussed.

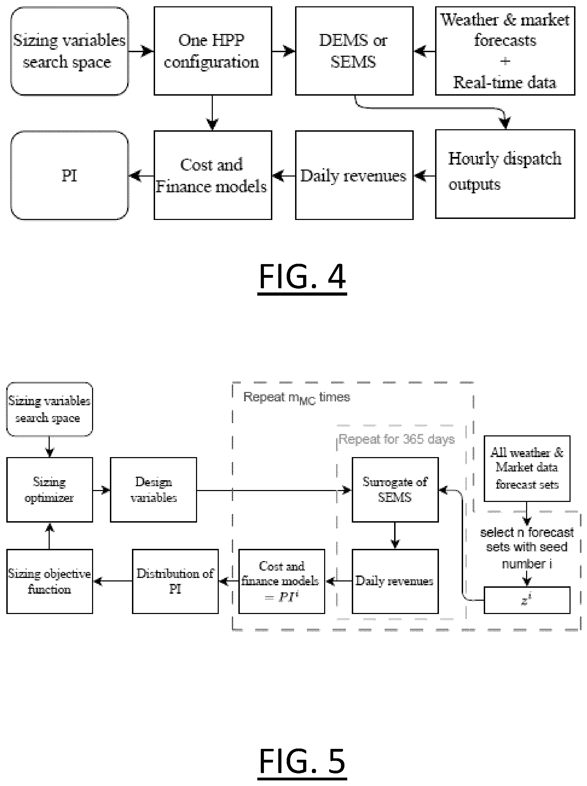

FIG. 4 and FIG. 5 illustrate the purpose of the sizing method. FIG. 4 shows a flowchart of an example of the HPP sizing process using a high-fidelity DEMS or SEMS. Inputs, which include sizing inputs (the ratios) and operational inputs (the time series), are fed to a high-fidelity SEMS, which outputs operational outputs. These outputs are used for the sizing (here to evaluate a function PI (profitability index) to be used in an optimization). As shown in FIG. 5, the sizing method replaces the high-fidelity SEMS by the surrogate model in the HPP sizing process (number *n_{MC}* is further discussed hereinafter).

The HPP sizing process may comprise performing an optimization of a HPP sizing objective function. The objective function has as free variable the ratios P^{R}/P^{G}, B^{P}/P^{G}, and B^{E}/B^{P}. As previously explained, P^{R} may consist in P^{W}, P^{S}, or both. The objective function also has as parameter a uncertainty parameter *zⁱ*. The uncertainty parameter *zⁱ* represents a set of forecasted instances of the set of input variables, *i.e.* a set of instances of values each of the input data representing a plurality of times series of values of the input variables. Each forecasted instance stems from a respective set of forecasters (which may be, or not, the same as the forecasters used during training). The objective function also has as parameter a measure parameter *z*ₜᵣᵤₑ representing an instance of the set of input variables (*i.e.* a value for the input data representing the plurality of times series of values of the input variables). The measure parameter *z*ₜᵣᵤₑ is obtained from physical measurements, *i.e.* it corresponds to a measured/real-world instance of the plurality of time series of values of the input variables where these values have been physically measured or observed, by appropriate measurement device(s). The optimization is based on results of applying the surrogate model. For example, the results of applying the surrogate model may be used to compute one or more KPI (Key Performance Indicator) which is/are used to compute the objective function. This is further discussed hereinafter.

The optimization may be a maximization, and the objective function may be of the type (*e.g.* may be exactly given exactly by the formula): $β ⋅ E \left[PI\left(x, {z}_{true}, {z}^{i}\right)\right] + \left(1-β\right) ⋅ σ \left[PI\left(x, {z}_{true}, {z}^{i}\right)\right] ,$ where *x* = (P^{R}/P^{G}, B^{P}/P^{G}, B^{E}/B^{P}) represents the ratios, where *β* is a predetermined constant, where PI(*x*, *w*) represents a HPP sizing objective, where *σ*[PI] is the standard deviation of PI, and 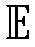 represents the expected value.

Implementations of the method of use/HPP sizing method, are now discussed.

Implementations of the HPP sizing process are illustrated by FIG. 5, as previously explained. Specifically, FIG. 5 illustrates implementations of the surrogate-based sizing optimization process designed to identify the optimal HPP configuration (*x*) while accounting for forecast uncertainties. The process begins with the sizing optimizer, which explores a pre-defined search space of design variables representing the HPP sizing parameters. For each configuration, the optimizer evaluates the sizing objective function, which is based on the distribution of the PI.

In implementations, to account for uncertainties, the weather and market data are represented as multiple forecast sets, including wind speed, solar irradiance, and electricity prices. From this pool, *n* forecast sets are selected for each simulation (*i.e.* each instance of the surrogate model seen during the optimization) for each HPP configuration *i.* These ensembles of forecast sets (*zⁱ*), together with the chosen HPP configuration, are provided as inputs to the surrogate of the SEMS model during the optimization. The surrogate, trained to emulate the high-fidelity SEMS, predicts daily profits (Π*_{d}*) for each day of the year. These daily profits are aggregated over 365 days to calculate the annual profits for the given HPP configuration, which are then combined with the cost and financial models to compute the *PI* for the configuration based on *zⁱ*, denoted as *PIⁱ* in FIG. 5.

Accounting for multiple forecast ensembles, the process is repeated *m_{MC}* times-each iteration using a distinct seed *i*-to evaluate annual profits and corresponding *PI* across all ensembles. This approach generates a distribution of *PI* values for each configuration, capturing variability in forecast conditions and providing a more comprehensive performance assessment under uncertainty.

In implementations, the sizing optimizer employs the sequential least-squares quadratic programming (SLSQP) algorithm (discussed in reference D. Kraft, A Software Package for Sequential Quadratic Programming, Deutsche Forschungs- und Ver-suchsanstalt für Luft- und Raumfahrt Köln: Forschungsbericht,Wiss. Berichtswesen d. DFVLR, 1988. URL: https: //books.google.dk/books?id=4rKaGwAACAAJ, which is incorporated herein by reference) with its implementation provided by the SciPy library (discussed in reference P. Virtanen, R. Gommers, T. E. Oliphant, M. Haberland, T. Reddy, D. Cournapeau, E. Burovski, P. Peterson, W. Weckesser, J. Bright, S. J. van der Walt, M. Brett, J. Wilson, K. J. Millman, N. Mayorov, A. R. J. Nelson, E. Jones, R. Kern, E. Larson, C. J. Carey, ˙I. Polat, Y. Feng, E. W. Moore, J. VanderPlas, D. Laxalde, J. Perktold, R. Cimrman, I. Henriksen, E. A. Quintero, C. R. Harris, A. M. Archibald, A. H. Ribeiro, F. Pedregosa, P. van Mulbregt, SciPy 1.0 Contributors, SciPy 1.0: Fundamental Algorithms for Scientific Computing in Python, Nature Methods 17 (2020) 261-272. doi:10.1038/s41592-019-0686-2, which is incorporated herein by reference). This algorithm is particularly well-suited for the application as it supports the definition of bounds within the search space, which is essential for excluding non-viable HPP configurations (e.g., combined installed wind and solar capacities exceeding thrice the grid connection limit). However, like many gradient-based methods, SLSQP is susceptible to converging to local minima. A multi-start strategy is implemented to mitigate this limitation and increase the likelihood of finding the global optimum. For each value of *β*, the optimization process is initiated from 100 distinct HPP configurations (*x*), sampled using the Latin Hypercube Sampling (LHS) method (discussed in reference R. Jin,W. Chen, A. Sudjianto, An efficient algorithm for constructing optimal design of computer experiments, Journal of Statistical Planning and Inference 134 (2005) 268-287. doi:10.1016/j.jspi.2004.02.014, which is incorporated herein by reference), to ensure comprehensive coverage of the search space. The optimal HPP configuration is determined as the one that maximizes the objective function, which considers the distribution of *PI* values. This multi-start approach enhances confidence in the optimization results by reducing the risk of being trapped in local minima. Leveraging the surrogate model significantly reduces the computational effort compared to high-fidelity SEMS simulations, making the optimization both efficient and scalable under conditions of uncertainty.

The repetition of sampling ensemble forecast sets *m_{MC}* times is also employed to approximate the expected value (IE) and standard deviation (*σ*) of the *PI,* required to compute the objective function. Since there is no an explicit analytical solution for these integrals, a numerical method is employed to compute $E \left[PI\left(x, {z}_{true}, {z}^{i}\right)\right]$ and *σ*[PI(*x*, *z*ₜᵣᵤₑ, *zⁱ*)]. Specifically, Monte Carlo Integration is used, allowing to estimate these statistics by repeatedly sampling from the pool of forecast sets. The value of *m_{MC}* has been fixed to 1,000 in implementations tested by the inventors. The expected value is calculated as: $E \left[PI\left(x, {z}_{true}, {z}^{i}\right)\right] \approx \frac{1}{{m}_{MC}} {\sum }_{m = 1}^{{m}_{MC}} {PI}^{i \left(m\right)} \left(x, {z}_{true}, {z}^{i \left(m\right)}\right)$ where *i*(*m*) explicitly denotes the seed used for the *m*-th Monte Carlo sample and *z*^{*i*(*m*)} represents the forecast set generated using that seed *i*(*m*)

The variance and standard deviation of *PI* are computed using the following equations $Var \left[PI\left(x, {z}_{true}, {z}^{i}\right)\right] \approx \frac{1}{{m}_{MC}} {\sum }_{m = 1}^{{m}_{MC}} {\left({PI}^{i \left(m\right)}-E\left[PI\left(x, {z}_{true}\right)\right]\right)}^{2}$ $σ \left[PI\left(x, {z}_{true}, {z}^{i}\right)\right] = \sqrt{Var \left[PI\left(x, {z}_{true}, {z}^{i}\right)\right]}$

*PI* has been defined above as the ratio of the NPV and the CAPEX. Implementations for computing NPV and CAPEX are now discussed.

NPV is the Net Present Value and may be given by the formula: $NPV \left(x\right) = {\sum }_{y = 1}^{Y} \frac{{CF}_{y}}{{\left(1+{r}_{AT}\right)}^{y}} ,$ where *Y* is the plant's operational lifetime in years, *CF_{y}* is the cash flow for year *y,* and *r_{AT}* is an after-tax discount rate.

*CF_{y}* may be given by the formula: ${CF}_{y} = \left\{\begin{matrix}{Profit}_{y}^{nom} , & for y > 0 \\ - CAPEX , & for y = 0 .\end{matrix}\right.$

The yearly nominal profits ${Profit}_{y}^{nom}$ may be calculated as follows: ${Profit}_{y}^{nom} = {EBITDA}_{y} - Payable _ {taxes}_{y} ,$ ${EBITDA}_{y} = {Π}_{y}^{nom} - {OPEX}_{y}^{nom} ,$ ${Π}_{y}^{nom} = {Π}_{y}^{real} ⋅ {inflation}_{{index}_{y}} ,$ ${OPEX}_{y}^{nom} = {OPEX}_{y}^{real} ⋅ {inflation}_{{index}_{y}} .$

CAPEX stands for "Capital Expenditures" and OPEX for "Operational Expenditures". A cost model evaluates CAPEX and OPEX by considering the expenses associated with the HPP, BESS power and energy capacities, and shared infrastructure costs. *EBITDA_{y}* is the Earnings Before Interest, Taxes, Depreciation, and Amortization for year y. ${Π}_{y}^{nom}$ and ${OPEX}_{y}^{nom}$ are the nominal yearly revenues and operating expenses, respectively, adjusted for inflation using: ${inflation}_{{index}_{y}} = {\prod }_{j = 1}^{y} \left(1+{inflation}_{j}\right)$

Straight-line depreciation and loss carryforward are two accounting practices that respectively distribute the cost of the HPP evenly over its lifetime and allow the carrying of losses from one year to subsequent years. Both mechanisms serve to reduce taxable income in the following way (which may be implemented by the method): ${EBIT}_{y} = {EBITDA}_{y} - Depreciation$ $Depreciation = \frac{CAPEX}{Y} ,$ where *EBIT_{y}* is the Earnings Before Interest and Taxes for year y.

The loss carryforward for year y may be given by: ${L}_{y - 1} = \left\{\begin{matrix}- {EBIT}_{y - 1} if {EBIT}_{y - 1} < 0 \\ 0 otherwise\end{matrix}\right.$ and the taxable income for year y may be given by: $Taxable {Income}_{y} = \left\{\begin{matrix}{EBIT}_{y} - {L}_{y - 1} if {EBIT}_{y} > 0 and {L}_{y - 1} > 0 \\ {EBIT}_{y} otherwise .\end{matrix}\right.$ This model assumes that the tax losses can be carried indefinitely without an amount limit.

Payable taxes for year *y* may be calculated as: $Payable _ {taxes}_{y} = Taxable {Income}_{y} ⋅ {τ}_{tax}$ with *τₜₐₓ* representing the tax rate.

The cost model performs the calculation of the CAPEX and OPEX per technology as well as the shared costs. This may be done as follows: $CAPEX = {C}_{w} ⋅ {f}^{W} + {C}_{b} ⋅ {f}^{B} + {C}_{el}$ ${OPEX}_{y} = {Q}_{w , y} ⋅ {f}^{W} + {O}_{b , y} ⋅ {f}^{B} + {O}_{el , y}$ ${C}_{w} = \left({WT}_{cost}⋅{f}^{W}+{WT}_{civil}⋅{f}^{W}\right) ⋅ {P}^{W}$ $\begin{matrix}{C}_{b} = {Nb}_{eq} ⋅ {B}_{cost}^{E} ⋅ {f}^{B} ⋅ {B}^{E} + \\ \left({B}_{cost}^{P}⋅{f}^{B}+{B}_{civil}^{P}⋅{f}^{B}+{B}_{control}^{P}⋅{f}^{B}\right) ⋅ {B}^{P}\end{matrix}$ ${C}_{el} = \left({HPP}_{BOS}+{P}_{cost}^{G}\right) ⋅ {P}^{G} + {C}_{land} ∗ {A}_{HPP}$ ${A}_{HPP} = {A}_{WT} ∗ {N}_{WT}$ $\begin{matrix}{O}_{w , y} = {WT}_{fixed , y}^{OM} ⋅ {f}^{W} ⋅ {P}^{W} + \\ mean \left(AEP\right) ⋅ {WT}_{variable , y}^{OM} ⋅ {f}^{W}\end{matrix}$ $\begin{matrix}{O}_{b , y} = {B}_{y}^{E , OM} ⋅ {f}^{B} ⋅ {B}^{E} \\ {O}_{e , y} = 0\end{matrix}$ where *C_{w}, C_{b}, Cₑₗ, C_{land}* are the CAPEX of the wind power plant, batteries, the balance of the system, and the land. A CAPEX of the solar power plant *Cₛ* may be used in addition to or alternatively to *C_{w},* if the HPP comprises a solar power plant in addition to or alternatively to (respectively) the wind power plant. In this case, a corresponding term *C_{S} · f^{S}* is to be added in the above CAPEX formula in addition to or alternatively to *C_{w} · f^{w},* where *Cₛ =* (*S_{cost} * f^{S}* + *S_{civil} * f^{S}*) ** P^{S} * DC_ACᵣₐₜᵢₒ + Sᵢₙᵥₑᵣₜₑᵣ * P^{s} * f^{S}, S_{cost} , S_{civil},* and *Sᵢₙᵥₑᵣₜₑᵣ* are the solar PV's cost, civil works, and inverter costs in Euro/MW, *DC_ACᵣₐₜᵢₒ* is the ratio of DC (Direct Current) power rating with respect AC (Alternative Current) rating of the PV plant. *O_{w,y}, O_{b,y},* and *O_{el,y}* are the yearly OPEX from the wind power plant, batteries and balance of the system. A CAPEX of the solar power plant *O_{s,y}* may be used in addition to or alternatively to *O_{w,y},* if the HPP comprises a solar power plant in addition to or alternatively to (respectively) the wind power plant. In this case, a corresponding term *O_{s,y} · f^{S}* is to be added in the above OPEX formula in addition to or alternatively to *O_{w,y} · f^{w},* where ${O}_{s , y} = {S}_{fixed}^{OM} ∗ {f}^{S} ∗ {P}^{S} ∗ DC _ {AC}_{ratio}$*,* where ${S}_{fixed , y}^{OM}$ is the fixed operation and maintenance costs of the solar panel per year and per MW. *WT_{cost}* and *WT_{civil}* are the wind turbine's cost and civil works in Euro/MW. *Nb_{eq}* is the number of battery equivalent in today's value. ${B}_{cost}^{E}$ is the battery energy cost per MWh while ${B}_{cost}^{P}$, ${B}_{civil}^{P}$ and ${B}_{control}^{P}$ are the battery power cost, civil costs and control system costs per MW. *HPP_{BOS}* and ${P}_{cost}^{G}$ are the shared Balance of System (BOS) cost and grid connection cost of the HPP. *A_{HPP}* is the total area occupied by the HPP in km² defined exclusively by the surface required for a wind turbine, *A_{WT},* and the number of wind turbines *N_{WT}.* If, instead of or in addition to a wind power plant, the HPP comprises a solar power plant, then the term *A_{SP} * N_{SP}* replaces the term *A_{WT} * N_{WT}* or is added to this term (respectively) in the formula for *A_{HPP},* where *A_{SP}* is the surface required for a solar panel, and *N_{SP}* is the number of solar panels. ${WT}_{fixed , y}^{OM}$ and ${WT}_{variable , y}^{OM}$ are the fixed and variable Operation and Maintenance (O&M) costs of the wind turbines per year and per MW. *mean*(*AEP*) is the mean Annual Energy Production (AEP) of the wind power plant. ${B}_{y}^{E , OM}$ is the yearly O&M cost of the battery per MWh. *f^{B}, f^{W}* and *f^{S}* are, respectively, the battery cost scaling factor, the wind cost scaling factor, and the solar cost scaling factor. The method may use a fixed lifetime for the battery (*i_{b}*) as battery degradation may not be considered. Additionally, to address the decreasing costs of batteries over time, the method may employ the concept of equivalent number of present batteries *Nb_{eq}.* The method may incorporate the annual battery price reduction rate *f_{b}* and the designated replacement year for each battery (*y_{b}*(*i_{b}*)) as follows: ${Nb}_{eq} = {\sum }_{{i}_{b} = 0}^{{N}_{b} - 1} {\left(1-{f}_{b}\right)}^{{y}_{b} \left({i}_{b}\right)}$

Given an HPP defined with vector x, the associated yearly revenues ${Π}_{y}^{real}$, and other required inputs of the cost and financial model, the method may calculate PI. ${Π}_{y}^{real}$ may be computed using the outputs of the surrogate model (the daily revenues) as further discussed hereinafter.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 6 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method of machine-learning, for learning a surrogate model of an HPP Stochastic Energy Management System (SEMS), the method comprising:
- obtaining a dataset of training examples, each training example including:
▪ an input, including:
• ratios representing a configuration of a hybrid power plant (HPP), the ratios including:
∘ a ratio P^{R}/P^{G} between a production capacity by one or more renewable energy resource P^{R} and a grid connection P^{G};
∘ a ratio B^{P}/P^{G} between a rated battery power B^{P} and the grid connection P^{G}; and
∘ a ratio B^{E}/B^{P} between a battery energy capacity B^{E} and the rated battery power B^{P};
• data representing, for each input variable of a set of input variables, a respective plurality of time series of values of the input variable over a predetermined period, the set of input variables comprising an input variable representing a demand for energy from the grid and one or more input variables each representing power of a respective renewable energy resource, where for at least two input variables, the respective pluralities of time series of the at least two input variables stem from different forecasters; and
▪ an output, including:
• data representing, for each output variable of a set of output variables, a respective plurality of time series of values of the output variable obtained by applying a high-fidelity SEMS to the input, the set of output variables comprising one or more output variables each representing a respective operational parameter of the HPP; and
- training the surrogate model based on the dataset.

2. The method of claim 1, wherein, for each training example, the at least two input variables consist in all the input variables and the different forecasters consist in one respective forecaster per input variable.

3. The method of claim 1 or 2, wherein, at least for some training examples, the forecasters are different from one example to the other.

4. The method of claim 3, wherein the training examples stem from an initial set of at least two training examples to which different respective sets of forecasters are applied.

5. The method of any one of claims 1 to 4, wherein the surrogate model includes a feed-forward neural network (FNN).

6. The method of any one of claims 1 to 5, wherein:
- the data representing, for each input variable of the set of input variables, the respective plurality of time series of values of the input variable over a predetermined period, is a truncated result of a singular value decomposition (SVD) applied to a matrix concatenating the pluralities of time series for all the input variables; and/or
- if the set of output variables comprises several output variables, the data representing, for each output variable of the set of output variables, the respective plurality of time series of values of the output variable, is a truncated result of applying a singular value decomposition (SVD) applied to a matrix concatenating the pluralities of time series for all the output variables.

7. The method of claim 6, wherein the singular value decomposition (SVD) is random singular value decomposition (rSVD).

8. The method of claims 6 or 7, wherein the surrogate model comprises:
- a preprocessing function configured to perform SVD; and/or
- a preprocessing function configured to perform normalization; and/or
- a postprocessing function configured to perform reverse SVD; and/or
- a postprocessing function configured to perform reverse normalization.

9. A surrogate model of a SEMS learnable according to the method of any one of claims 1 to 8.

10. A computer-implemented method of use of a surrogate model of a SEMS according to claim 9, the method of use being for HPP sizing, the method of use including using the surrogate model instead of a high-fidelity SEMS model in the HPP sizing process.

11. The method of claim 10, wherein the HPP sizing process comprises performing an optimization of a HPP sizing objective function having as free variable the ratios, the objective function having as parameter a uncertainty parameter *zⁱ* representing a set of forecasted instances of the set of input variables, each forecasted instance stemming from a respective set of forecasters, the objective function also having as parameter a measure parameter *z*ₜᵣᵤₑ representing an instance of the set of input variables obtained from physical measurements, the optimization being based on results of applying the surrogate model.

12. The method of claim 11, wherein the optimization is a maximization, and the objective function is of the type: $β ⋅ E \left[PI\left(x, {z}_{true}, {z}^{i}\right)\right] + \left(1-β\right) ⋅ σ \left[PI\left(x, {z}_{true}, {z}^{i}\right)\right] ,$ where *x* represents the ratios, where *β* is a predetermined constant, where PI(*x*, *w*) represents a HPP sizing objective, where *σ*[PI] is the standard deviation of PI, and 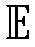 represents the expected value.

13. A computer program comprising instructions which, when executed by a computer, cause the computer to perform the method of any one of claims 1 to 8 and/or the method of any one of claims 10 to 12.

14. A computer-readable data storage medium having recorded thereon the computer program of claim 13 and/or the surrogate model of claim 9.

15. A computer system comprising a processor coupled to a memory, the memory having recorded thereon the computer program of claim 13 and/or the surrogate model of claim 9.
